# DEMANDE DE BREVET EUROPEEN

(11) **EP 1 069 425 A1**
(43) Date de publication de la demande: **17.01.2001**
(21) Numéro de dépôt: 00430025.7
(22) Date de dépôt: 07.07.2000
(51) Int. Cl.: G01N 21/15, G01N 21/53

(54) **Procédé et dispositif de détection et de mesure optique de la quantité de particules opaques présentes dans un gaz**

(30) Priorité: 12.07.1999 FR 9909202
(71) Demandeur: ENTREPRISE GENERALE DE CHAUFFAGE INDUSTRIEL PILLARD, 13272 Marseille Cédex 08 (FR)
(72) Inventeur: Bury, Frédéric, 13190 Allauch (FR); Lafont, Bernard, 13360 Roquevaire (FR)
(74) Mandataire: Domange, Maxime

(57) **Abrégé**

La présente invention est relative à un procédé et à un dispositif de détection et de mesure optique de la quantité de particules opaques présentes dans un gaz ou dans un mélange gazeux. Le domaine technique de l'invention est celui de la fabrication d'opacimètres.

Selon l'invention, un appareil (1) de détection de fumée utilisant la mesure de la partie de la lumière émise par un faisceau de fibres émetteur qui est réfléchie par la fumée par un faisceau récepteur, comporte un boîtier creux étanche à l'air, à l'intérieur duquel s'étendent deux manchons (22, 23) supportant respectivement les deux extrémités (9a, 16a) de faisceaux de fibres optiques, le boîtier étant percé d'un orifice d'admission d'un gaz dans la cavité (8) qu'il délimite, chaque manchon délimitant un logement (20, 21) cylindrique apte à recevoir une extrémité de faisceau avec un jeu radial de manière à délimiter un premier conduit annulaire de transport d'air autour de l'extrémité du faisceau, lequel premier conduit communique avec la cavité par un ou plusieurs premiers orifices (24) calibrés, chaque manchon délimitant en outre un deuxième conduit (25, 26) annulaire de transport d'air autour du faisceau, qui communique avec la cavité par un ou plusieurs deuxièmes orifices (27) calibrés, le deuxième conduit s'étendant autour du premier conduit.

## Description

La présente invention est relative à un procédé et à un dispositif de détection et de mesure optique de la quantité de particules opaques présentes dans un gaz ou dans un mélange gazeux.

Le domaine technique de l'invention est celui de la fabrication d'opacimètres.

La présente invention concerne une amélioration apportée à l'appareil de détection de fumée décrit dans le brevet FR 2 036 476 ; ce brevet décrit un appareil comportant une source lumineuse, un faisceau de fibres de verres conduisant la lumière de la source jusqu'à un émetteur, un détecteur et une cellule photoélectrique également reliés par des fibres de verre ; le détecteur est disposé incliné par rapport à l'émetteur et de façon à capter la partie de lumière émise qui est réfléchie par les particules en suspension dans les fumées.

Malgré l'intérêt de ces appareils, il s'est avéré que leurs performances se dégradent au cours du temps, en particulier à cause de phénomènes d'encrassement des extrémités de fibres optiques, et ce malgré la présence de buses de soufflage d'air sur ces extrémités.

La présente invention a pour objet de proposer un opacimètre amélioré.

Selon un premier aspect, l'invention consiste à proposer un opacimètre qui comporte un boîtier creux étanche à l'air, à l'intérieur duquel s'étendent deux manchons supportant respectivement les deux extrémités de faisceaux de fibres optiques ; le boîtier est percé d'un orifice d'admission d'air (ou d'un gaz propre équivalent) dans la cavité qu'il délimite ; chaque manchon délimite un logement cylindrique apte à recevoir une extrémité de faisceau avec un jeu radial de manière à délimiter un premier conduit annulaire de transport d'air autour de l'extrémité du faisceau ; ce premier conduit communique avec la cavité du boîtier par un ou plusieurs premiers orifices calibrés ; chaque manchon délimite en outre un deuxième conduit annulaire de transport d'air autour du faisceau, qui communique avec la cavité du boîtier par un ou plusieurs deuxièmes orifices calibrés, le deuxième conduit s'étendant autour du premier conduit.

De préférence le boîtier incorpore en outre un moyen permettant de maintenir l'air soufflé autour des extrémités de faisceau à une température située dans une plage allant de 100 à 200°C (en particulier de 110 à 150°C), par une résistance électrique logée à l'intérieur du boîtier, dans un conduit de guidage de l'air admis dans le boîtier.

La présence des deux conduits annulaires coaxiaux autour de chaque extrémité de faisceau permet d'assurer un balayage optimal de l'embout de faisceau et d'éviter son encrassement, notamment par les particules dont on souhaite détecter la présence ou mesurer la quantité ; le maintien d'un débit d'air prédéterminé dans chaque conduit est assuré par la présence des orifices calibrés (de diamètre généralement de l'ordre de 1 à 3 mm) ; ces orifices de faible section permettent en outre d'assurer un débit d'air également distribué dans les conduits des deux manchons recevant les deux extrémités de faisceau, ceci malgré des variations éventuelles de la pression d'air entrant dans la cavité du boîtier.

Afin d'assurer un chauffage efficace de l'air pénétrant dans la cavité du boîtier, la résistance de chauffage s'étend de préférence sur une (ou le long d'une) partie substantielle d'un conduit de guidage d'air ; en outre à cet effet, le conduit chauffé de guidage d'air comporte de préférence plusieurs portions imbriquées (coaxiales) de section annulaire, afin de présenter une grande surface d'échange dans un volume limité.

De préférence le boîtier est muni d'un organe ou capteur sensible au passage d'air, tel qu'un pressostat, et un organe ou capteur sensible à la température de l'air chauffé par l'élément chauffant, tel qu'un thermocouple, afin de contrôler en permanence le bon fonctionnement du système de balayage d'air chaud à l'extrémité des deux faisceaux de fibres, de déclencher un signal d'alarme en cas de dysfonctionnement, et le cas échéant d'arrêter l'alimentation de l'élément chauffant pour éviter sa détérioration ; l'invention permet en outre d'éviter que des parties du boîtier ne dépassent une température prédéterminée qui, en cas de dépassement, conduirait à un risque d'inflammation ou d'explosion des gaz en contact avec l'appareil, dont l'appareil contrôle la teneur en particules solides opaques ; l'invention permet en outre d'éviter la détérioration du boîtier par des condensats corrosifs.

Selon un autre aspect, l'invention consiste en un appareil d'opacimétrie par mesure de la partie réfléchie d'un faisceau de lumière visible par des particules en suspension dans un gaz (ou mélange gazeux), qui comporte un moyen de soufflage (balayage) de gaz aux extrémités d'un faisceau émetteur et d'un faisceau récepteur ; selon l'invention, on utilise comme gaz de balayage le gaz ou mélange gazeux à analyser qui est filtré avant balayage ; de préférence le gaz à analyser est soumis à un échauffement suffisant pour provoquer la dégradation thermique des composés organiques, puis filtré ; le gaz à analyser est de préférence porté à une température au moins égale à 500°C, en particulier à une température de l'ordre de 700 à 900°C, par passage dans un four électrique, puis refroidi avant filtration et délivrance au boîtier équipé des deux manchons porte-faisceaux.

L'invention permet d'assurer, par l'utilisation du gaz (pollué) à analyser préalablement débarrassé de ses composants contaminants (hydrocarbures essentiellement), par leur dégradation thermique suivie d'une séparation des particules brûlées (cendres), aux fins du dépoussiérage des embouts de fibres optiques, un fonctionnement satisfaisant dans le cas où un gaz propre n'est pas disponible à proximité du lieu d'implantation de l'opacimètre ; l'invention s'applique en particulier à la détection de fumée dans des constructions diverses, en particulier des tunnels routiers ou ferroviaires.

En portant le mélange gazeux à haute température, de préférence voisine de 800°C, on transforme en cendres la majeure partie des particules d'hydrocarbure liquide présentes dans le mélange gazeux ; ces cendres sont retenues par le filtre disposé en aval du four ; on évite ainsi que les particules d'hydrocarbure, par suite de leur entraînement par le mélange gazeux de balayage, ne se collent aux extrémités des faisceaux de fibre optique et ne viennent perturber la mesure ; en outre la retenue des cendres dans le filtre provoque un colmatage de celui-ci qui est beaucoup plus lent que celui qui résulterait - en absence de four - de la retenue des particules par le filtre ; on rallonge ainsi la durée de vie utile de la cartouche du filtre et on diminue l'encrassement des autres pièces (pompes, conduits) disposés en aval du filtre.

De préférence, l'opacimètre comporte un four électrique, un échangeur pour le refroidissement du mélange gazeux, un filtre et une pompe successivement disposés en amont du boîtier de l'opacimètre.

Selon un autre aspect, l'invention consiste en un procédé dans lequel on utilise un appareil selon l'invention pour la détection de fumée, dans lequel on contrôle en permanence le débit et la température d'un gaz de balayage des embouts de fibre optique, et dans lequel on émet un signal lorsque le débit ou la température se situe hors d'une plage de valeur prédéterminée.

Selon un autre aspect, on utilise le mélange gazeux ou gaz à analyser comme gaz de protection des embouts de fibre optique, et on sépare des composés polluants présents dans ce gaz par une dégradation thermique associée à une filtration.

Les avantages procurés par l'invention seront mieux compris au travers de la description suivante qui se réfère aux dessins annexés, qui illustrent sans aucun caractère limitatif des modes préférentiels de réalisation de l'invention.

Dans les dessins, les éléments identiques ou similaires portent, sauf indication contraire, les mêmes références d'une figure à l'autre.

La figure 1 illustre en vue en coupe un boîtier support d'extrémité de faisceau de fibres d'un opacimètre selon l'invention.

La figure 2, qui est une vue en coupe selon II/II de la figure 1, illustre en vue en coupe longitudinale un réchauffeur d'air intégré au boîtier de l'opacimètre.

La figure 3 illustre les principaux composants additionnels d'un opacimètre équipé d'un four de dégradation thermique d'hydrocarbures.

Le boîtier de l'opacimètre 1 comporte des parois métalliques 2 à 7, 32 et 40 qui délimitent une cavité 8 étanche à l'air ; un faisceau 9 de fibres transporte la lumière émise par une source (non représentée) séparée du boîtier, jusqu'à la face d'extrémité 10 à la sortie de laquelle la lumière se propage selon un faisceau 11 dans le milieu gazeux 12 à analyser, tel que le courant gazeux s'écoulant dans une cheminée délimitée par une paroi 13 dans un orifice de laquelle le boîtier est fixé.

Un écran 14 solidaire du boîtier empêche la transmission directe du faisceau 11 vers la face 15 d'extrémité du faisceau 16 (partiellement représenté) qui transmet la lumière 11 réfléchie par les particules du milieu 12 jusqu'à un détecteur séparé du boîtier ; des portions droites d'extrémité des faisceaux 9, 16 s'étendent selon deux axes 17, 18 formant un angle 19 de 90 degrés ; les portions 9a, 16a d'extrémité des faisceaux 9, 16 sont respectivement disposées dans deux logements 20, 21 cylindriques d'axe 17, 18 qui sont respectivement prévus dans deux manchons 22, 23 supportant les portions 9a, 16a ; deux orifices 24 radiaux de faible diamètre mettent en communication les logements 20, 21 avec la cavité 8 ; ces orifices permettent le passage d'un courant d'air de débit prédéterminé, de la cavité 8 alimentée en air sous pression, jusqu'au conduit ou passage de section annulaire délimité par la face interne des logements 20, 21 et par la face externe des portions 9a, 16a de faisceau.

Autour du logement 20, 21 est prévu dans chaque manchon 22, 23 un second passage 25, 26 de section annulaire qui entoure le logement (20, 21 respectivement) ; les conduits 25, 26 communiquent chacun par deux orifices calibrés 27 diamétralement opposés, avec la cavité 8 sous pression.

Grâce à ces deux conduits annulaires coaxiaux qui s'étendent au travers des parois 2 et 7 et débouchent autour de la face d'extrémité 10, 15 de chaque faisceau, ces faces sont balayées par un courant de gaz (air) chaud qui évite d'une part leur encrassement et la modification en résultant des paramètres de transmission de la lumière, et qui permettent d'autre part d'éviter l'oxydation prématurée des parois métalliques de l'appareil par des condensats de vapeur d'eau et/ou de produits corrosifs éventuellement présents dans le milieu 12 ou dans le gaz de balayage ; en outre ce balayage effectué selon une symétrie de révolution (d'axe respectif 17, 18) au sortir des conduits (20, 21, 25, 26) ne perturbe pas la mesure de la lumière réfléchie par les particules du milieu 12.

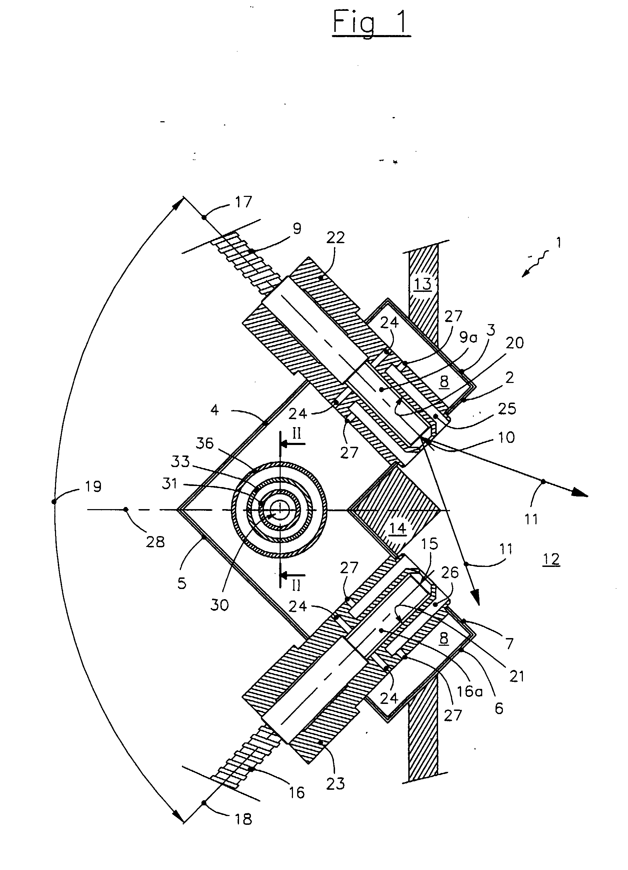

L'appareil 1 est sensiblement construit selon une symétrie par rapport au plan 28 perpendiculaire au plan de la figure 1.

Le boîtier peut être réalisé par soudure bout à bout, dans le plan 28, de deux tronçons de tube métallique carré obturés à une extrémité.

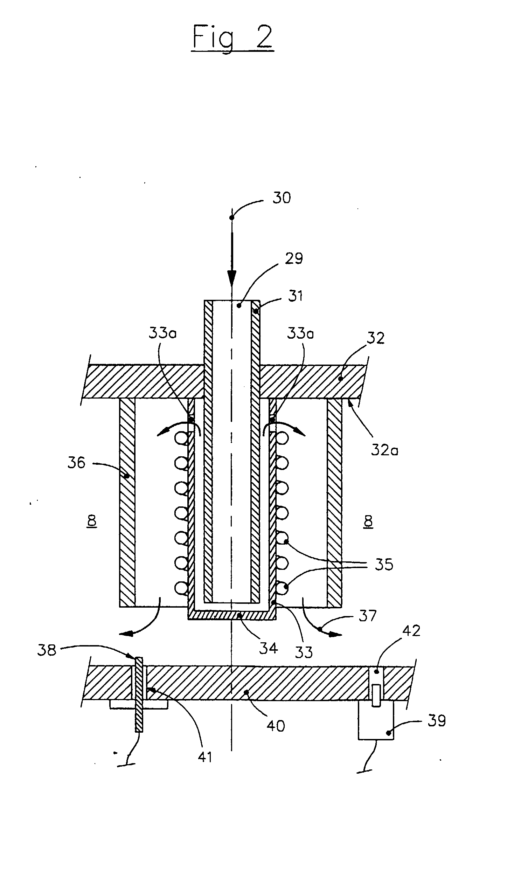

L'air (ou gaz) de balayage est introduit dans la cavité 8 par un orifice 29 situé dans ce plan, et est guidé par trois sections tubulaires coaxiales d'axe 30 (figure 2) ; un premier tronçon de tube 31 s'étend au travers de la paroi 32 du boîtier ; un deuxième tronçon 33 fixé par une première extrémité sur la face interne 32a de la paroi 32, entoure le tube 31 et est obturé par un fond 34 à sa deuxième extrémité ; ce tronçon 33 est percé d'ouvertures 33a à sa première extrémité pour permettre au gaz de balayage de le traverser, et est revêtu sur sa face externe d'une résistance chauffante 35 ; un troisième tronçon 36 de tube entoure le tube 33, étant fixé sur la face interne 32a et ouvert à sa deuxième extrémité ; ces trois tubes délimitent un conduit de passage d'air de section sensiblement constant ; les parois des tubes 31, 33, 36 sont portées à une température de l'ordre de 200 à 300°C par la résistance 35, par conduction et rayonnement essentiellement, et permettent l'échauffement de l'air sortant dans la cavité 8 selon la flèche 37 jusqu'à une température de l'ordre de 100 à 200°C ; la structure particulière de ce réchauffeur facilite la retenue et/ou l'évaporation de particules éventuellement présentes dans le gaz de balayage (huile et eau notamment).

Un thermocouple 38 s'étendant au travers d'un orifice 41 percé dans la paroi 40 du boîtier ainsi qu'un pressostat 39 communiquant avec la cavité 8 par un deuxième orifice 42, qui sont raccordés à une unité électronique de commande (non représentée), permettent un contrôle permanent de la température de sortie (37) de l'air du réchauffeur, et de la pressurisation de la cavité 8 afin que ces paramètres restent dans des plages de valeur prédéterminées permettant d'assurer des conditions correctes de balayage des extrémités de faisceaux de fibres.

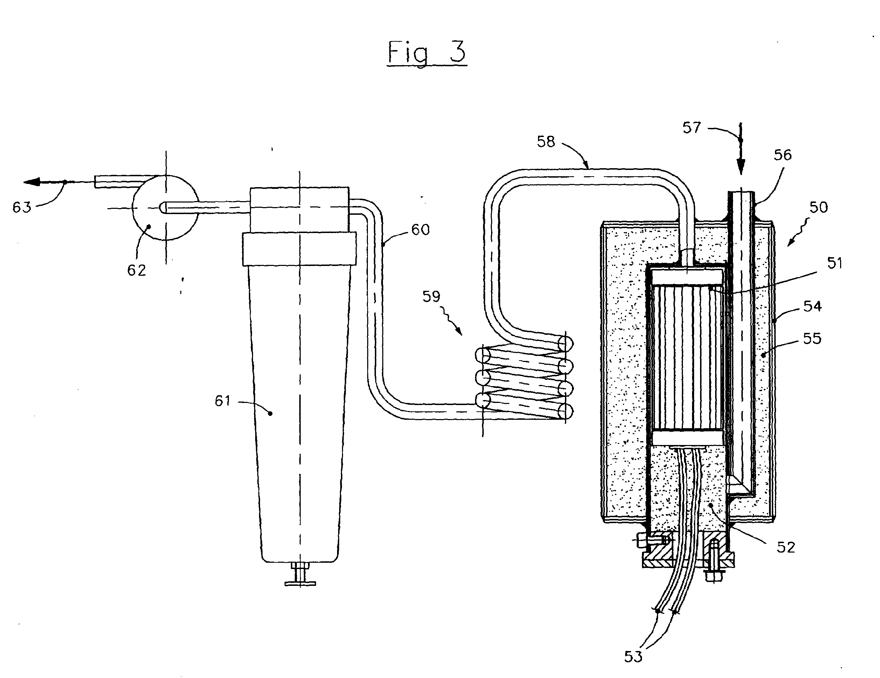

Dans le cas où l'on ne dispose pas d'une source de gaz propre pour effectuer le balayage des extrémités de faisceau, notamment pour un opacimètre installé à demeure dans un tunnel routier, l'appareil représenté figure 3 permet d'utiliser l'air ambiant qui peut être pollué (par des hydrocarbures notamment) par les gaz d'échappement des véhicules empruntant le tunnel ; afin d'éviter que les particules collantes entraînées par le gaz ambiant de balayage ne provoque un colmatage très rapide d'un simple filtre et/ou l'encrassement des conduits de l'opacimètre et celui des faisceaux de fibres optiques, l'appareil comporte un four 50 qui comporte :
- un élément chauffant 51 cylindrique logé dans une chambre 52, calé par un matériau isolant tel que fibre céramique ou laine de roche et raccordé à une alimentation électrique par des conducteurs 53 ;
- un boîtier 54 entourant la chambre 52 et rempli dudit matériau isolant 55 ;
- un conduit 56 traversant le boîtier 54 et débouchant dans la chambre 52 pour l'admission en 57 d'air ambiant et son transport jusqu'à la chambre.

L'appareil comporte en outre un conduit 58 raccordé à la chambre 52, en aval de l'élément chauffant 51, pour le transport de l'air chaud jusqu'à un échangeur 59 permettant le refroidissement de l'air.

Cet échangeur peut être de type air/gaz, le fluide refroidisseur étant l'air ambiant passant autour de l'échangeur 59 pour circulation naturelle ou forcée par un ventilateur, ou de type liquide/gaz, le fluide refroidisseur étant un liquide, eau par exemple, circulant autour de l'échangeur 59.

Un conduit 60 assure le transport de l'air de la sortie de l'échangeur 59 à l'entrée d'un filtre 61 à cartouche remplaçable ; une pompe 62 est raccordée à la sortie du filtre pour provoquer l'aspiration de l'air et sa délivrance (63) au boîtier de l'opacimètre.

Des résultats optimaux sont obtenus en choisissant une pompe à membrane et des cartouches de grade correspondant à un seuil de filtration de l'ordre de 10 microns, constituées de microfibres de verre agglomérées par un liant inorganique.

Un balayage satisfaisant des faces d'extrémité de faisceaux peut être obtenu en maintenant un débit d'air de l'ordre de 0,2 à 2 m³ par heure pour chaque extrémité de faisceaux.

Dans le cas de l'utilisation du four de dégradation thermique, le réchauffeur intégré au boîtier support de faisceau n'est pas nécessaire.

## Revendications

1. Appareil (1) de détection de fumée utilisant la mesure de la partie de la lumière émise par un faisceau de fibres émetteur qui est réfléchie par la fumée, par un faisceau récepteur, caractérisé en ce qu'il comporte un boîtier creux étanche à l'air, à l'intérieur duquel s'étendent deux manchons (22, 23) supportant respectivement les deux extrémités (9a, 16a) de faisceaux de fibres optiques, le boîtier étant percé d'un orifice d'admission d'un gaz dans la cavité (8) qu'il délimite, chaque manchon délimitant un logement (20, 21) cylindrique apte à recevoir une extrémité de faisceau avec un jeu radial de manière à délimiter un premier conduit annulaire de transport d'air autour de l'extrémité du faisceau, lequel premier conduit communique avec la cavité par un ou plusieurs premiers orifices (24) calibrés, chaque manchon délimitant en outre un deuxième conduit (25, 26) annulaire de transport d'air autour du faisceau, qui communique avec la cavité par un ou plusieurs deuxièmes orifices (27) calibrés, le deuxième conduit s'étendant autour du premier conduit.

2. Appareil selon la revendication 1, dans lequel le boîtier incorpore en outre un moyen permettant de maintenir l'air soufflé autour des extrémités de faisceau à une température située dans une plage allant de 100 à 200°C, le moyen comportant une résistance électrique (35) logée à l'intérieur du boîtier, dans un conduit de guidage de l'air admis dans le boîtier.

3. Appareil selon la revendication 2, dans lequel la résistance de chauffage s'étend sur une partie substantielle d'un conduit de guidage d'air qui comporte plusieurs portions imbriquées de section annulaire.

4. Appareil selon l'une quelconque des revendications 2 ou 3, dans lequel le boîtier est muni d'un organe sensible au passage d'air dans la cavité (8), tel qu'un pressostat (39).

5. Appareil selon l'une quelconque des revendications 2 à 4, dans lequel le boîtier est muni d'un organe sensible à la température d'air chauffé par l'élément chauffant, tel qu'un thermocouple (38).

6. Appareil selon l'une quelconque des revendications 1 à 5, qui comporte un moyen de dégradation de composés polluants contenus dans un mélange gazeux à analyser et un moyen de séparation des composés dégradés.

7. Appareil selon la revendication 6, qui comporte un four (50) électrique, un échangeur (59) pour le refroidissement du mélange gazeux, un filtre (61) et une pompe (62) successivement disposés en amont du boîtier de l'opacimètre.

8. Appareil selon l'une quelconque des revendications 6 ou 7, qui comporte une pompe (62) à membrane et un filtre (61) à cartouche comportant des microfibres de verre.

9. Procédé de détection de fumée dans lequel on utilise un appareil selon l'une quelconque des revendications 1 à 8, dans lequel on contrôle en permanence le débit et la température d'un gaz de balayage des embouts de fibre optique, et dans lequel on émet un signal lorsque le débit ou la température se situe hors d'une plage de valeur prédéterminée.

10. Procédé de détection de fumée dans lequel on utilise un appareil selon l'une quelconque des revendications 1 à 8, dans lequel on utilise le mélange gazeux ou gaz à analyser comme gaz de protection des embouts de fibre optique, et dans lequel on sépare des composés polluants présents dans ce gaz par une dégradation thermique associée à une filtration.
